# EUROPÄISCHE PATENTANMELDUNG

(11) **EP 1 342 894 A1**
(43) Veröffentlichungstag der Anmeldung: **10.09.2003**
(21) Anmeldenummer: 02024849.8
(22) Anmeldetag: 08.11.2002
(51) Int. Cl.: F02B 37/013

(54) **Abgasturbolader**

(30) Priorität: 01.03.2002 DE 10209289
(71) Anmelder: MAN NUTZFAHRZEUGE AG, 80995 München (DE)
(72) Erfinder: Möller, Heribert, Dipl-Ing., 91623 Sachsen (DE)

(57) **Zusammenfassung**

Die Erfindung bezieht sich auf einen Abgasturbolader. Abgasturbolader haben die negative Eigenschaft im instationären Betrieb träge zu reagieren. Die Folge ist das sogenannte Turboloch und seine Folge, Luftmangel und der bekannte Rußstoß. Um diesem Mangel abzuhelfen, wird erfindungsgemäß vorgeschlagen, daß die Abgasturbine 2 zwei Verdichter 3, 4 antreibt, von denen der erste Verdichter 3 eine höhere Drehzahl aufweist als die Abgasturbine 2 und der zweite Verdichter 4 mit gleicher Drehzahl läuft wie die Abgasturbine 2. Der erste Verdichter 3 liefert somit schon bei kleiner Drehzahl der Abgasturbine 2 hinreichenden Ladeluftdruck, während bei zunehmender Drehzahl der Abgasturbine 2 der zweite Verdichter 4 einen größer werdenden Anteil am Ladeluftdruck übernimmt. Erfindungsgemäß werden stets beide Verdichter 3, 4 angetrieben. Der Antrieb kann direkt, oder unter Zwischenschaltung einer Getriebestufe 5 erfolgen. Gemäß einem Ausführungsbeispiel nach Fig. 1 wird der erste Verdichter 3 unter Zwischenschaltung der Getriebestufe 5 und der zweite Verdichter 4 direkt angetrieben.

## Beschreibung

Die Erfindung bezieht sich auf einen Abgasturbolader gemäß dem Oberbegriff des Patentanspruches 1.

Turbolader haben die negative Eigenschaft auf Laständerungen der Brennkraftmaschine träge zu reagieren. Die Folge ist das sogenannte Turboloch und eine daraus resultierende erhöhte Rußemission. Um das Ansprechverhalten des Turboladers zu verbessern wurde vorgeschlagen zwei Turbolader vorzusehen, die beim Hochfahren der Brennkraftmaschine zunächst in Reihe geschaltet sind. Einer der Turbolader ist dabei deutlich kleiner ausgeführt, um schon bei geringer Abgasmenge hinreichend Leistung zu liefern. Bei zunehmender Abgasmenge und Abgasenthalpie wird der kleinere Turbolader durch ein Umschaltventil zunehmend umfahren und nur noch der größere Abgasturbolader vom Abgas durchströmt. Die in den ersten Abgasturbolader gesteckte Energie ist nach dem Umschalten größtenteils verloren ( DE 43 31 943 C2).

Aufgabe der Erfindung ist es, das Ansprechverhalten des Abgasturboladers zu verbessern.

Gelöst wird diese Aufgabe durch die kennzeichnenden Merkmale des Patentanspruches 1.

Durch den mit höherer Drehzahl als die Abgasturbine laufenden ersten Verdichter wird schon im unteren Drehzahlbereich ein hinreichender Ladeluftdruck erzielt. Bei ansteigender Drehzahl der Abgasturbine übernimmt der zweite Verdichter einen steigenden Anteil am Aufbau des Ladeluftdruckes. Der erste Verdichter bleibt aber stets eingebunden. Die in ihm steckende kinetische Energie ist somit nicht verloren.

Vorteilhafte Weiterbildungen des allgemeinen Erfindungsgedankens sind den Unteransprüchen 2 bis 4 zu entnehmen.

Nach Anspruch 5 kann zwischen den beiden Verdichtern noch eine Ladeluftkühlung vorgesehen werden, was zu einer Reduzierung der Verdichtungsarbeit und zu einer Erhöhung der volumetrischen Leistungsdichte der Brennkraftmaschine führt.

Ausführungsbeispiele der Erfindung sind an Hand von Zeichnungen darstellt. Es zeigt:
- Fig. 1: einen Abgasturbolader mit zwei Verdichtern und einer Getriebestufe, wobei der zweite Verdichter auf gemeinsamer Welle mit einer Abgasturbine angeordnet ist und der erste Verdichter über ein Zwischenrad angetrieben wird
- Fig. 2: einen Abgasturbolader mit zwei Verdichtern und einer GetriebeStufe, wobei der zweite Verdichter auf gemeinsamer Welle mit der Abgasturbine angeordnet ist und der erste Verdichter ohne Zwischenrad angetrieben wird
- Fig. 3: einen Abgasturbolader mit zwei Verdichtern, wobei beide VerDichter von Zahnrädern angetrieben werden, welche mit einem Zahnrad auf der Welle der Abgasturbine kämmen

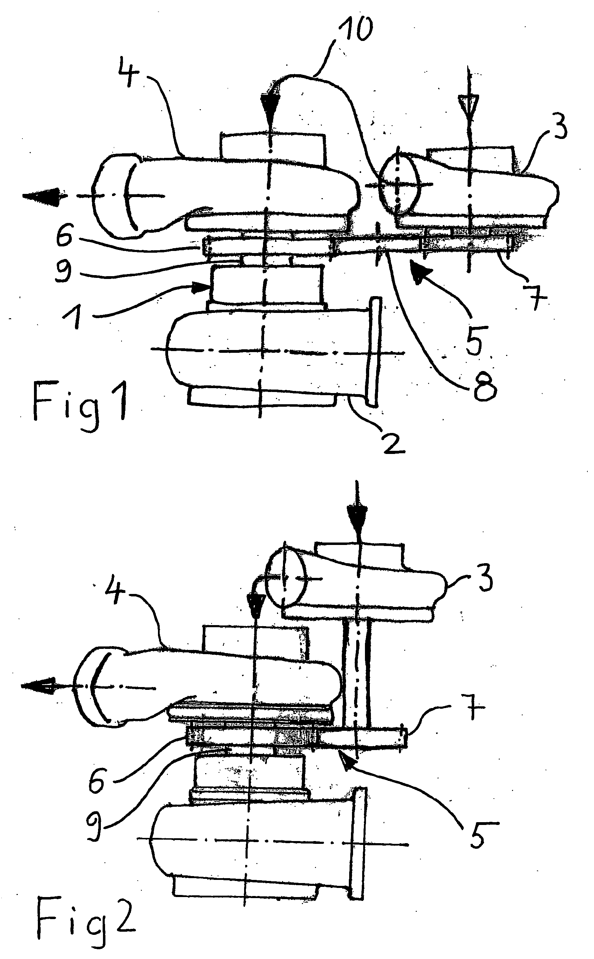

Figur 1 zeigt einen Abgasturbolader 1 bestehend aus einer Abgasturbine 2, einem ersten Verdichter 3 und einen zweiten Verdichter 4.

Dem allgemeinen Erfindungsgedanken folgend werden die beiden Verdichter 3, 4 gemeinsam von der Abgasturbine 2 angetrieben. Der Antrieb erfolgt mittels einer Getriebestufe 5, derart, daß der erste Verdichter 3 mit größerer Drehzahl läuft als der mit gleicher Drehzahl wie die Abgasturbine 2 laufende zweite Verdichter 4.

In der hier dargestellten Ausführung besteht die Getriebestufe 5 aus einem ersten Zahnrad 6, einem zweiten Zahnrad 7 und einem Zwischenrad 8.

Das erste Zahnrad 6 ist auf einer Verbindungswelle 9 angeordnet, welche die Abgasturbine 2 mit dem zweiten Verdichter 4 verbindet. Das erste Zahnrad 6 kämmt mit dem Zwischenrad 8 und dieses überträgt sein Drehmoment auf das zweite Zahnrad 7, welches auf der Welle des ersten Verdichters 3 angeordnet ist. Das Zwischenrad 8 gestattet eine freiere Wahl des Achsabstandes der Verdichter 3 und 4.

Erfindungsgemäß sind die Übersetzungsverhältnisse der Zahnräder 6, 7, 8 so gewählt, daß der erste Verdichter 3 schneller läuft als der mit der Abgasturbine 2 direkt verbundene zweite Verdichter 4.

Im Betrieb wird Umgebungsluft vom ersten Verdichter 3 angesaugt, vorverdichtet und entsprechend dem Pfeil 10 zur weiteren Verdichtung dem Saugbereich des zweiten Verdichters 4 zugeführt.

Durch die höhere Drehzahl des ersten Verdichters 3 wird beim Hochfahren der Brennkraftmaschine, wenn also die Abgasturbine 2 noch langsam läuft, im ersten Verdichter 3 schon eine spürbare Vorverdichtung erreicht. Dieser schnellere Anstieg des Ladeluftdruckes führt über einen Rückkopplungseffekt mit der Brennkraftmaschine zu einem schnelleren Anstieg der Abgasmenge und der Abgasenthalpie und dies wiederum zur Beschleunigung der Abgasturbine 2.

Die Ausführung nach Fig. 2 ist mit der Ausführung nach Fig. 1 weitgehend identisch, verzichtet aber in der Getriebestufe 5 auf ein Zwischenrad. Das erste Zahnrad 6 ist auf der Verbindungswelle 9 von Abgasturbine 2 und zweitem Verdichter 4 angeordnet. Dies ist möglich, wenn der zweite Verdichter 4 im Durchmesser nicht zu groß ist. Ab einem bestimmten Durchmesser des zweiten Verdichters 4 wird der Durchmesser des ersten Zahnrades 6 so groß, daß dessen Umfangsgeschwindigkeit beim Eingriff mit dem zweiten Zahnrad 7 des ersten Verdichters 3 nicht mehr beherrschbar ist. .

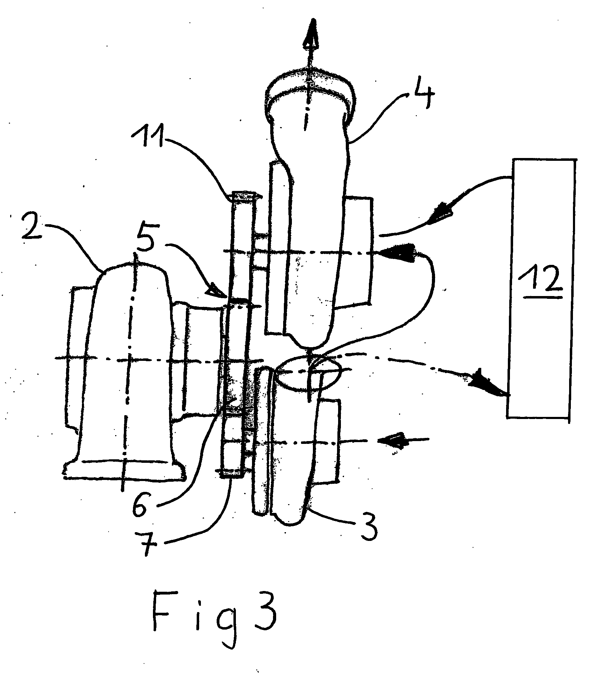

Nach Fig. 3 wird der erste und der zweite Verdichter 3, 4 über die Getriebestufe 5 von der Abgasturbine 2 angetrieben. Die Getriebestufe 5 besteht aus einem ersten Zahnrad 6 auf der Welle der Abgasturbine 2. Das erste Zahnrad 6 kömmt mit einem zweiten Zahnrad 7 des ersten Verdichters 3 und gleichzeitig mit einem dritten Zahnrad 11 des zweiten Verdichters 4.

Die im ersten Verdichter 3 vorverdichtete Luft kann vor dem Eintritt in den zweiten Verdichter 4 in einem Zwischenkühler 12 rückgekühlt werden.

Die Zwischenkühlung ist selbstverständlich nicht auf die Ausführung entsprechend der Fig. 3 beschränkt, sondern kann auch bei den Ausführungen nach den Figuren 1 und 2 angewendet werden. Durch die Zwischenkühlung wird Verdichtungsarbeit eingespart und die volumetrische Leistung der Brennkraftmaschine gesteigert.

## Patentansprüche

1. Abgasturbolader, bestehend aus mindestens einer Abgasturbine und zwei Verdichtern, **dadurch gekennzeichnet, daß** die Abgasturbine (2) beide Verdichter (3, 4) antreibt, wobei die Verdichter (3, 4 ) teils direkt, oder unter Zwischenschaltung einer Getriebestufe (5) angetrieben werden, derart, daß ein erster Verdichter (3) eine höhere Drehzahl als die Abgasturbine (2) und der zweite Verdichter (4) die gleiche Drehzahl wie die Abgasturbine (2) aufweist.

2. Abgasturbolader nach Anspruch 1, **dadurch gekennzeichnet, daß** die Getriebestufe (5) aus einem ersten Zahnrad (6), einem Zwischenzahnrad (8) und einem zweiten Zahnrad (7) gebildet wird, daß das erste Zahnrad (6) auf einer Verbindungswelle (9) der Abgasturbine (2) mit dem zweiten Verdichter (4) und das zweite Zahnrad (7) auf einer Welle des ersten Verdichters (3) angeordnet ist und erstes und zweites Zahnrad (6, 7) im Eingriff mit dem Zwischenzahnrad (8) stehen.

3. Abgasturbolader nach Anspruch 1, **dadurch gekennzeichnet, daß** die Getriebestufe (5) aus einem ersten und einem zweiten Zahnrad (6, 7) gebildet wird, daß das erste Zahnrad (6) auf einer Verbindungswelle (9) der Abgasturbine (2) mit dem zweiten Verdichter (4) und das zweite Zahnrad (7) auf der Welle des ersten Verdichters (3) angeordnet ist, und daß das erste Zahnrad (6) mit dem zweiten Zahnrad (7) kämmt.

4. Abgasturbolader nach Anspruch 1, **dadurch gekennzeichnet, daß** die Getriebestufe (5) aus einem ersten, einem zweiten und einem dritten Zahnrad (6, 7,11) gebildet wird, daß das erste Zahnrad (6) auf der Welle der Abgasturbine (2), das zweite Zahnrad (7) auf der Welle des ersten Verdichters (3) und das dritte Zahnrad (11) auf der Welle des zweiten Verdichters (4) angeordnet ist, und daß zweites und drittes Zahnrad ( 7, 11) mit dem ersten Zahnrad (6) kämmt.

5. Abgasturbolader nach den Ansprüchen 1 bis 4, **dadurch gekennzeichnet, daß** zwischen dem ersten und dem zweiten Verdichter (3, 4) ein Zwischenkühler (12) vorgesehen ist.
